# FASCICULE DE BREVET EUROPEEN

(11) **EP 2 133 972 B1**
(45) Date de publication et mention de la délivrance du brevet: **29.07.2015**
(21) Numéro de dépôt: 09290369.9
(22) Date de dépôt: 18.05.2009
(51) Int. Cl.: H02G 3/08, H02G 3/14

(54) **Plaque d'habillage pour appareillage électrique**
Verkleidungsplatte für Elektrogerät
Covering plate for an electrical device

(30) Priorité: 12.06.2008 FR 0803268
(43) Date de publication de la demande: 16.12.2009
(73) Titulaire: Legrand France, 87000 Limoges (FR); Legrand SNC, 87000 Limoges (FR)
(72) Inventeur: Mourgaud, Jean-François, 87220 Feytiat (FR); Janicot, Laurent, 87110 Solignac (FR)
(74) Mandataire: Orsini, Fabienne

(56) Documents cités:
- FR-A1- 2 858 105
- FR-A1- 2 907 977
- GB-A- 438 576
- GB-A- 532 404
- GB-A- 2 359 202
- US-A1- 2007 224 866

## Description

### DOMAINE TECHNIQUE AUQUEL SE RAPPORTE L'INVENTION

La présente invention concerne de manière générale une plaque d'habillage pour appareillage électrique qui comporte à l'arrière des moyens de montage pour son montage sur une partie avant d'un appareillage électrique et qui présente au moins une ouverture destinée à donner accès à au moins une partie fonctionnelle de l'appareillage électrique.

### ARRIÈRE-PLAN TECHNOLOGIQUE

Les appareillages électriques connus comportent un mécanisme d'appareillage électrique fixé sur un support d'appareillage électrique. Ce support se présente sous la forme d'un cadre destiné à être rapporté sur une boîte d'encastrement ou en saillie dans laquelle ledit mécanisme d'appareillage électrique est logé.

Un enjoliveur spécifique à la fonction de l'appareillage électrique est monté en face avant du mécanisme d'appareillage électrique. Il peut s'agir par exemple d'un bouton pour interrupteur ou d'une prise électrique.

Autour de cet enjoliveur, l'appareillage électrique comporte une plaque d'habillage destinée à masquer le mécanisme d'appareillage, le support d'appareillage électrique et la boîte d'encastrement ou en saillie.

Cette plaque d'habillage permet d'intégrer de manière esthétique l'appareillage électrique à la paroi l'accueillant.

Lorsqu'il s'agit d'un appareillage électrique encastré, la plaque d'habillage prend appui contre la paroi d'encastrement.

Les plaques d'habillage sont pour la plupart réalisées en matière plastique moulée afin de réduire leur coût de fabrication. Toutefois le moulage d'une matière plastique limite les possibilités de rendu esthétique.

En outre, ces plaques d'habillage en matière plastique moulée ne présentent pas une grande résistance mécanique en flexion ou en traction.

On connaît par exemple des documents GB438576 et GB532404 des plaques d'habillage pour appareillage électrique du type interrupteur mural qui présentent une ouverture destinée à donner accès au bouton-poussoir de cet interrupteur. Ici, les plaques d'habillage ne comportent pas de moyens de montage propres et sont seulement plaquées contre le mur par un rebord de l'appareillage électrique qui appuie sur leur face avant.

Les plaques d'habillage décrites dans chacun de ces deux documents comportent une plaque métallique dont l'une seulement des faces avant ou arrière et le contour sont recouverts d'une matière plastique.

La résistance mécanique de la plaque d'habillage est ainsi améliorée, mais les possibilités de rendu esthétique restent limitées.

En outre, ces plaques d'habillages sont peu aisées à mettre en place sur l'appareillage.

Enfin la présence d'une plaque métallique apparente en face avant ou en face arrière induit un sentiment d'insécurité chez l'utilisateur. Dans le cas du document GB438576, la plaque métallique est accessible en face avant, et l'utilisateur est amené à être en contact avec elle lorsqu'il utilise l'appareillage électrique correspondant. Dans le cas du document GB532404, la plaque métallique est accessible en face arrière, et l'utilisateur peut craindre une mauvaise isolation si des fils électriques de connexion entrent en contact avec cette plaque.

### OBJET DE L'INVENTION

Par rapport à l'état de la technique précité, la présente invention propose une nouvelle plaque d'habillage pour appareillage électrique dont la solidité est renforcée et dont l'aspect esthétique peut largement varier par rapport au rendu d'une matière plastique moulée.

A cet effet, on propose selon l'invention une plaque d'habillage pour appareillage électrique telle que décrite dans la revendication 1.

La plaque de finition ainsi obtenue incorpore dans son matériau de structure un plaque métallique complètement entourée de ce matériau de structure, et présente ainsi une résistance mécanique élevée tout en offrant de multiples possibilités esthétiques.

En outre, aucune partie métallique de la plaque d'habillage n'étant accessible à l'utilisateur, celui-ci bénéficie d'un sentiment de sécurité accrue, aussi bien lors de l'installation de la plaque d'habillage que lors de l'utilisation de l'appareillage électrique correspondant.

D'autres caractéristiques avantageuses et non limitatives de la plaque d'habillage selon l'invention sont décrites dans les revendications 2 à 11.

L'invention concerne également un procédé de fabrication d'une plaque de finition pour une plaque d'habillage tel que décrit dans la revendication 12.

D'autres caractéristiques avantageuses et non-limitatives du procédé selon l'invention sont décrites dans les revendications 13 et 14.

L'invention concerne également un dispositif tel que décrit dans la revendication 15, pour la fabrication d'une plaque de finition selon ce procédé.

### DESCRIPTION DÉTAILLÉE D'UN EXEMPLE DE RÉALISATION

La description qui va suivre en regard des dessins annexés, donnée à titre d'exemple non limitatif, fera bien comprendre en quoi consiste l'invention et comment elle peut être réalisée.

Sur les dessins annexés:
- la figure 1 est une vue schématique en perspective de la face avant de la plaque d'habillage selon un premier mode de réalisation de l'invention,
- la figure 2 est une vue schématique en perspective éclatée de la plaque d'habillage de la figure 1,
- la figure 3 est une vue en perspective de la face arrière de la sous-plaque de la plaque d'habillage de la figure 1,
- la figure 4 est une vue schématique de la face arrière de la plaque de finition de la plaque d'habillage de la figure 1,
- la figure 5 est une vue schématique de la face avant de la plaque de finition de la plaque d'habillage de la figure 1,
- la figure 6 est une vue schématique en coupe selon le plan P de la plaque de finition de la plaque d'habillage de la figure 5,
- la figure 7 est une vue de détail de la zone A de la figure 6,
- les figures 8 et 9 sont des vues de détail en coupe de la plaque d'habillage selon d'autres modes de réalisation de l'invention,
- la figure 10 est une vue schématique en perspective du moule utilisé pour fabriquer la plaque de finition de la plaque d'habillage selon l'invention,
- la figure 11 est une vue schématique en perspective du support utilisé pour fabriquer la plaque de finition de la plaque d'habillage selon l'invention,
- la figure 12 est une vue schématique en perspective de l'étape d'assemblage du moule et du support pendant la fabrication de la plaque de finition de la plaque d'habillage selon l'invention,
- la figure 13 est une vue schématique en perspective de dessus du moule et du support assemblés, et
- la figure 14 est une vue schématique en perspective de côté du moule et du support assemblés de la figure 11.

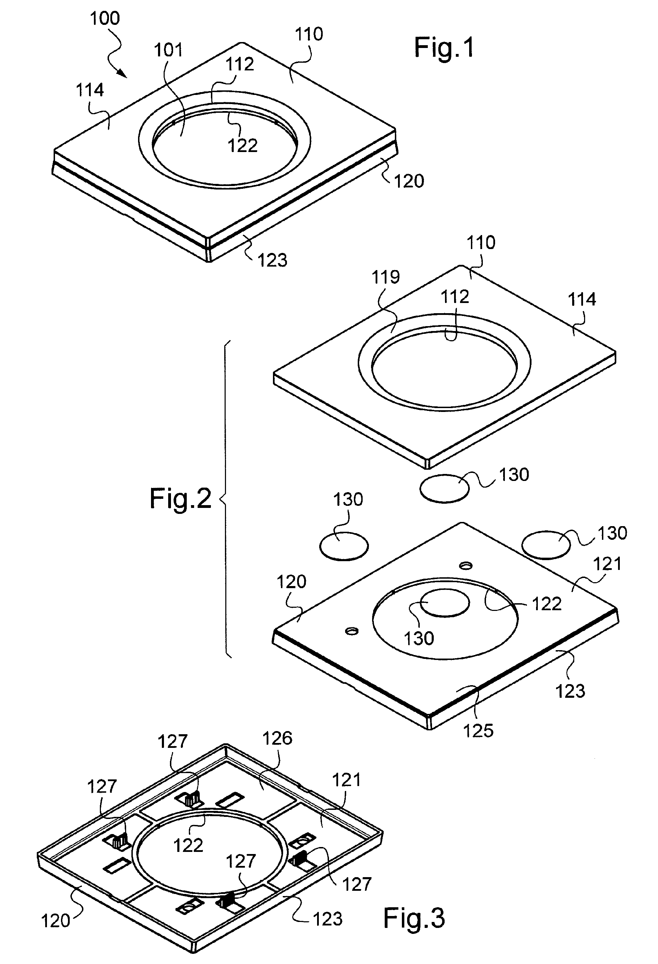

Sur la figure 1, on a représenté une plaque d'habillage 100 pour un appareillage électrique (non représenté). Cette plaque d'habillage 100 comporte une sous-plaque 120 sur laquelle est fixée une plaque de finition 110.

Cette plaque de finition 110 et la sous-plaque 120 présentent chacune une forme rectangulaire et sont sensiblement de mêmes dimensions. La plaque de finition 110 et la sous-plaque 120 se superposent ainsi pratiquement parfaitement (voir figure 1) pour former la plaque d'habillage 100 qui présente ici une forme globalement parallélépipédique.

La sous-plaque 120 de cette plaque d'habillage 100 comporte à l'arrière des moyens de montage 127 (visibles sur la figure 3) pour le montage de ladite plaque d'habillage 100 sur une partie avant d'un appareillage électrique (non représenté).

Le montage de la plaque d'habillage 100 est ainsi très aisé pour l'utilisateur.

La plaque de finition 110 et la sous-plaque 120 présentent chacune une ouverture 112, 122 circulaire centrée dont la superposition lorsqu'elles sont assemblées forment une ouverture 101 traversante circulaire centrée de la plaque d'habillage 100.

Cette ouverture 101 de la plaque d'habillage 100 est destinée à donner accès à une partie fonctionnelle de l'appareillage électrique sur lequel ladite plaque d'habillage 100 est montée. Elle donne accès par exemple à une touche de commande d'un interrupteur électrique ou à un puits d'une prise de courant. Toutefois, il peut s'agir d'une toute autre partie fonctionnelle telle qu'une commande d'un variateur ou autre. La partie fonctionnelle est donnée par l'enjoliveur de l'appareillage électrique.

La plaque d'habillage 100 présente ici une longueur égale à environ 10 centimètres et une largeur égale à environ 8,2 centimètres.

Les ouvertures 101, 112, 122 respectives de la plaque d'habillage 100, de la plaque de finition 110 et de la sous-plaque 120 présentent un diamètre D1 égal à environ 53 millimètres.

En variante, la plaque d'habillage peut comporter une ou plusieurs ouvertures de forme quelconque. En particulier, elle peut comporter une ouverture rectangulaire donnant accès à plusieurs parties fonctionnelles d'un appareillage électrique multiposte, par exemple trois puits de prises de courant ou deux touches de commande d'interrupteurs électriques. Elle peut également comporter plusieurs ouvertures circulaires destinées à donner accès aux parties fonctionnelles d'un appareillage électrique multiposte.

De manière remarquable, selon l'invention, la plaque de finition 110 de cette plaque d'habillage 100 présente une épaisseur comprise entre 2,5 et 5 millimètres et comprend une plaque métallique 140 d'armature noyée dans un matériau de structure isolant moulé.

Ladite plaque de finition 110 est alors avantageusement fine et résistante.

Comme le montrent les figures 1 et 2, le débouché de l'ouverture 112 de la plaque de finition 110 sur la face avant 114 de celle-ci est ici bordée d'un chanfrein 119.

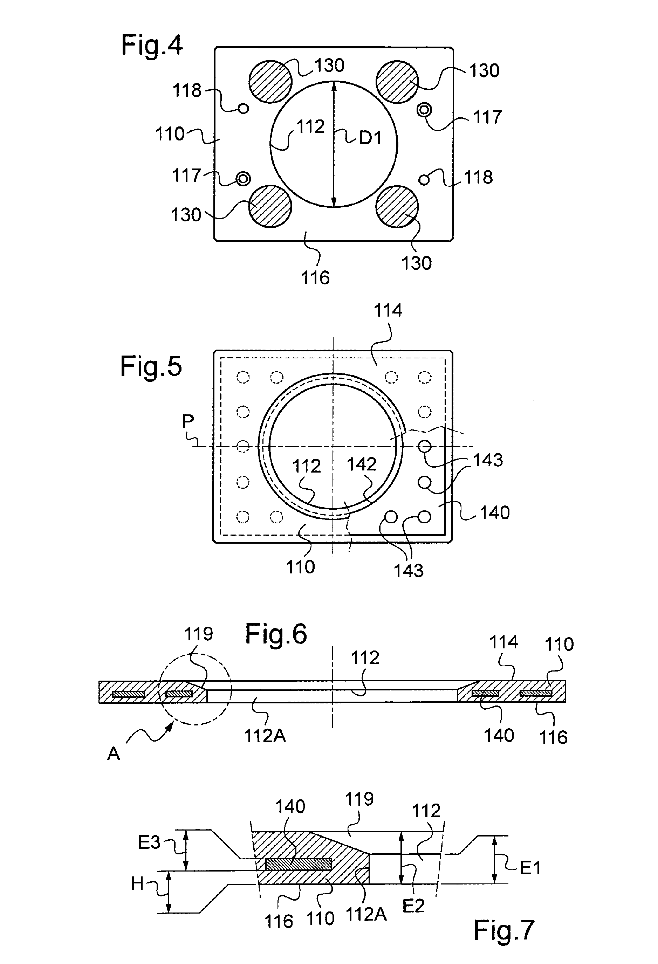

Comme le montrent plus particulièrement les figures 6 et 7, en dehors de la zone de la plaque de finition 110 comportant ce chanfrein 119, l'épaisseur E2 de la plaque de finition est uniforme et environ égale à 4 millimètres. L'épaisseur de la plaque de finition décroît au niveau du chanfrein 119 et atteint une épaisseur minimale E1 environ égale à 2,5 millimètres au niveau de la tranche interne 112A qui délimite l'ouverture 112 de ladite plaque de finition 110.

De préférence, ledit matériau de structure de ladite plaque de finition est un mélange comprenant des liants durcissables à l'eau et à l'air, présentant après durcissement des propriétés au moins comparables à celles d'une pierre naturelle, tel que décrit dans le brevet européen EP 1 524 250 (voir notamment le paragraphe 28 donnant des exemples précis de compositions de ce mélange).

Ce mélange comporte en particulier de la chaux hydraulique et du plâtre de moulage, des charges minérales, un adjuvant fluidifiant, un adjuvant réducteur d'eau, un adjuvant retardateur de prise, un agent anti-bullage et un entraîneur d'air.

Les charges minérales peuvent être calcaires ou siliceuses.

La proportion en poids de la chaux hydraulique et celle du plâtre de moulage est comprise entre 25 et 75 % du poids total de ces deux constituants, et la quantité de charge minérale ajoutée est comprise entre 0,5 et 6 fois le poids total de la chaux hydraulique et du plâtre de moulage.

Ce mélange est un matériau minéral dont l'aspect et les propriétés peuvent être ajustés pour copier ceux de différentes pierres naturelles, par exemple le calcaire ou le marbre. Il permet de mouler des pièces de forme complexe avec un aspect de surface très satisfaisant. Son temps de prise est avantageusement réduit et il ne subit pas de micro-fissuration lors du séchage.

De plus, d'autres adjuvants peuvent être ajoutés pour rendre le mélange hydrofuge et oléofuge. Les salissures de la plaque de finition 110 lors de l'utilisation de l'appareillage électrique associé par l'utilisateur sont ainsi avantageusement limitées.

Ce mélange peut également comporter des pigments de manière à le teinter dans la masse.

Avantageusement, ce mélange peut être utilisé pour réaliser une plaque d'habillage ayant l'aspect de tout type de béton : béton brut, béton blanc, béton ciré...

Ceci autorise avantageusement une grande variété d'aspects esthétiques possibles pour cette plaque de finition 110.

Comme le montrent les figures 5 et 6, le matériau de structure de la plaque de finition 110 entoure entièrement la plaque métallique 140 rigide.

Le matériau de structure recouvre donc les deux faces et le contour de la plaque métallique 140.

Celle-ci est noyée dans le matériau de structure à une distance H de la face arrière 116 de la plaque de finition 110 de préférence égale à 1,25 mm (voir figure 7).

La plaque de finition 110 présente ainsi une solidité optimale.

En outre, aucune partie métallique de cette plaque de finition n'étant accessible à l'utilisateur, celui-ci bénéficie d'un sentiment de sécurité accrue, aussi bien lors de l'installation de la plaque d'habillage que lors de l'utilisation de l'appareillage électrique correspondant.

La plaque métallique 140 est réalisée par exemple en acier, de préférence en acier inoxydable et présente par exemple une épaisseur E3 égale à 1 millimètre.

Alternativement, la plaque métallique peut être réalisée dans tout type d'acier traité contre la corrosion, par exemple par galvanisation, ou dans d'autres métaux ou alliages comme l'aluminium ou le bronze.

Comme représenté sur la figure 5, cette plaque métallique 140 présente ici une forme similaire à la forme de la plaque de finition 110, qui est ici rectangulaire. Elle présente de préférence une longueur et une largeur légèrement inférieures aux dimensions de la plaque de finition 110, par exemple une longueur égale à environ 9,4 centimètres et une largeur égale à environ 7,6 centimètres.

Elle comporte également une ouverture 142 de dimensions légèrement supérieures aux dimensions de l'ouverture 101 de la plaque d'habillage. Cette ouverture 142 est centrale et circulaire, de diamètre légèrement supérieur au diamètre de l'ouverture 112 de la plaque de finition 110, par exemple égal à 6 centimètres.

Par ailleurs, cette plaque métallique 140 comporte ici des orifices 143 traversants répartis sur sa surface dont le diamètre est typiquement de quelques millimètres, par exemple 5 millimètres.

La plaque métallique 140 étant noyée dans le matériau de structure, les orifices 143 sont remplis par ce matériau de structure de manière à renforcer la cohésion du matériau de structure et de la plaque métallique 140 dans la plaque de finition 110.

La sous-plaque 120 de la plaque d'habillage 100 comporte une paroi de support 121 bordée par une paroi latérale 123 tombante qui s'étend à partir de la face arrière 126 de ladite paroi de support 121, sensiblement perpendiculairement à celle-ci.

La sous-plaque 120 est réalisée de préférence en matière plastique, par exemple par moulage. Alternativement, elle peut être réalisée en métal.

La plaque de finition 110 est fixée sur la face avant 125 de la paroi de support 121 de la sous-plaque 120.

Selon un premier mode de réalisation représenté sur la figure 2, la plaque de finition 110 est fixée sur la face avant 125 de la paroi de support 121 de la sous-plaque 120 au moyen de pastilles 130 de matériau adhésif double face (voir figures 2 et 4).

Une face adhésive de chacune de ces pastilles 130 est collée sur la face arrière 116 de la plaque de finition 110 (figure 4) et l'autre face adhésive de chacune de ces pastilles 130 est collée sur la face avant 125 de la sous-plaque 120.

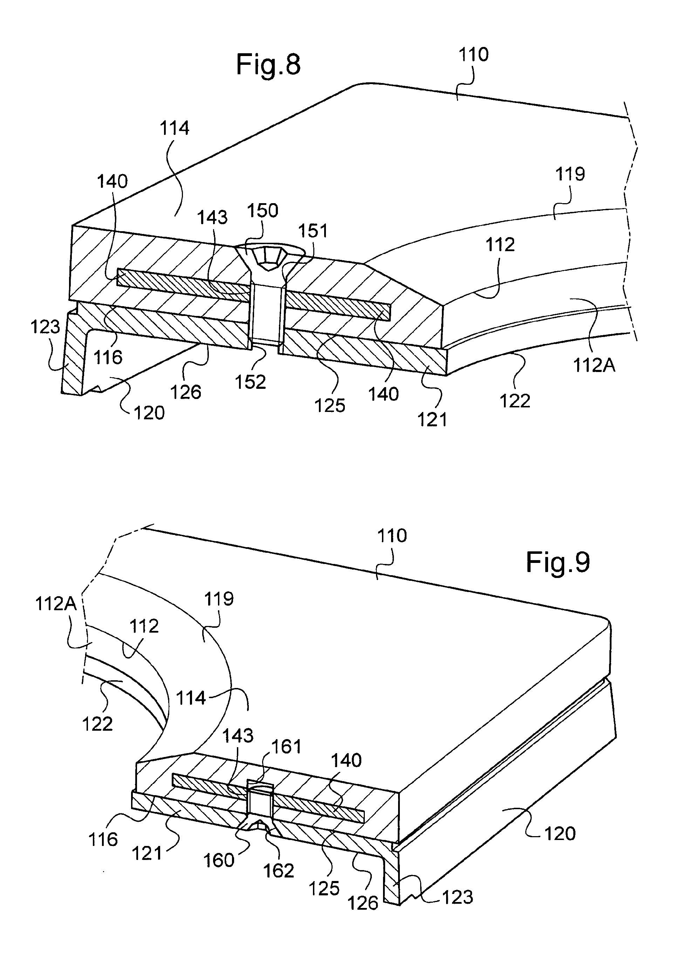

Alternativement, comme le montrent les figures 8 et 9, la plaque de finition 110 peut être vissée sur la sous-plaque 120.

Selon un second mode de réalisation représenté sur la figure 8, la plaque de finition 110 comporte au moins un orifice 151 qui traverse toute l'épaisseur de cette plaque de finition 110, en traversant le matériau de structure entourant ladite plaque métallique 140 ainsi que ladite plaque métallique 140, par exemple au niveau de l'un des orifices 143 de la plaque métallique 140. Un autre orifice 152 fileté traverse la paroi de support 121 de la sous-plaque 120 en vis-à-vis de l'orifice 151 de la plaque de finition 110.

Une vis de fixation 150 traverse les deux orifices 151, 152 pour fixer la plaque de finition 110 sur la face avant 125 de la paroi de support 121 de la sous-plaque 120.

Une partie de l'orifice 151 de la plaque de finition 110 qui débouche sur la face avant 114 de la plaque de finition 110 s'élargit pour loger la tête de ladite vis de fixation 150, de manière que celle-ci affleure la face avant 114 de la plaque de finition 110.

Selon un troisième mode de réalisation représenté sur la figure 9, la plaque de finition 110 comporte au moins un orifice 161 non traversant, qui débouche sur la face arrière 116 de la plaque de finition 110 et traverse la plaque métallique 140, par exemple au niveau de l'un des orifices 143 de celle-ci. Cet orifice 143 de la plaque métallique 140 est alors fileté. La sous-plaque 120 comporte un orifice 162 traversant en regard de dudit orifice 161 de la plaque de finition 110.

Une vis de fixation 160 traverse les deux orifices 161, 162 pour fixer la plaque de finition 110 sur la sous-plaque 120.

Une partie de l'orifice 162 de la sous-plaque 120 débouchant sur la face arrière 126 de la paroi de support 121 de la sous-plaque 120 s'élargit pour loger la tête de ladite vis de fixation 160 de manière que celle-ci affleure la face arrière 126 de la sous-plaque 120.

Comme représenté sur la figure 3, la plaque de support 121 de la sous-plaque 120 porte ici sur sa face arrière 126 des moyens d'encliquetage de la plaque d'habillage 100 sur la face avant d'un mécanisme d'appareillage électrique ou celle d'un support pour mécanisme d'appareillage électrique.

Ces moyens d'encliquetage comprennent ici quatre picots 127 s'étendant à partir de la face arrière 126 de la paroi de support 121, perpendiculairement à celle-ci et répartis autour de l'ouverture 122 traversant cette paroi de support 121.

Plus précisément, les picots 127 se présentent sous la forme de languettes s'étendant parallèlement aux deux côtés longitudinaux de la paroi latérale 123 de la sous-plaque 120, de part et d'autre de l'ouverture 122 de la sous-plaque 120 et comportent sur leur face tournée vers cette paroi latérale 123 des griffes d'accrochage sur le mécanisme d'appareillage électrique ou sur le support d'appareillage électrique.

En variante, les moyens de montage de la plaque d'habillage sur la face avant du mécanisme d'appareillage électrique ou du support pour mécanisme d'appareillage électrique peuvent comporter des pattes d'encliquetage s'étendant à partir de la plaque métallique de façon à émerger de la face arrière de la plaque de finition. La sous-plaque comporte alors des orifices à travers lesquels passent ces pattes d'encliquetage, de manière que ces pattes d'encliquetage fassent saillie à partir de la face arrière de la paroi de support de la sous-plaque.

En variante encore, les moyens de montage de la plaque d'habillage sur la face avant du mécanisme d'appareillage électrique ou du support pour mécanisme d'appareillage électrique peuvent comporter des ouvertures traversant ladite plaque d'habillage et destinées à accueillir des vis de fixation de ladite plaque d'habillage sur la face avant du mécanisme d'appareillage électrique ou du support pour mécanisme d'appareillage électrique.

Quel que soit le mode réalisation de la plaque d'habillage 100, la plaque de finition 110 de celle-ci est soumise, lors de son utilisation, à des efforts de flexion. Par exemple, dans le cas d'un appareillage électrique du type prise de courant électrique, lors du branchement et du débranchement de ladite prise électrique des contraintes de flexion s'exercent sur ladite plaque de finition 110, perpendiculairement au plan de celle-ci. La présence de la plaque métallique 140 noyée dans le matériau de structure de la plaque de finition 110 renforce sa résistance lors de sa sollicitation en traction et en flexion.

Ladite plaque de finition 110 est de préférence réalisée selon les étapes suivantes.
- on coule dans le fond d'un moule 200 comportant au moins une empreinte 230 de la plaque de finition 110 le matériau de structure à l'état liquide pour remplir une partie de ce moule 200 ;
- on fixe de manière amovible au moins une plaque métallique 140 telle que décrite précédemment sur des broches de maintien 320 et de positionnement 330 s'étendant à partir d'un support 300 ;

- on rapporte ledit support 300 en vis-à-vis du moule 200, de manière que chaque plaque métallique 140 s'insère de façon centrée dans l'empreinte 230 de la plaque de finition correspondante dudit moule 200 ;
- on coule le matériau de structure à l'état liquide sur ladite plaque métallique 140 dans ledit moule 200 pour remplir celui-ci complètement ;
- après solidification du matériau de structure, on démoule les plaques de finition 110 obtenues.

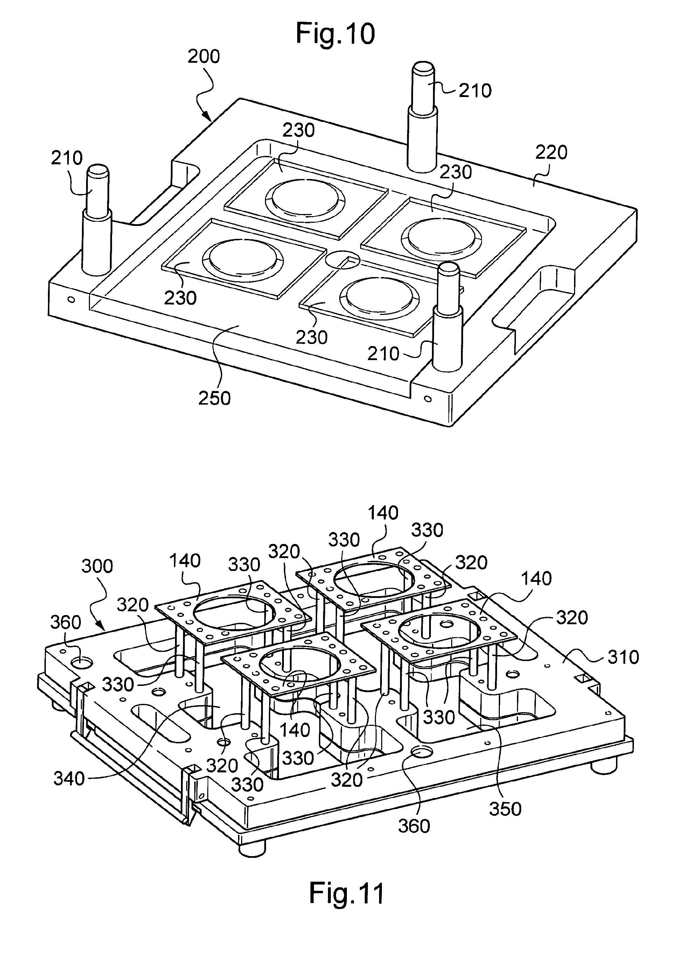

En pratique, le moule 200 comporte une partie souple 250 fixée sur une embase 220 rigide. La partie souple 250 du moule 200 comporte de préférence une pluralité d'empreintes 230 de cette plaque de finition 110, par exemple quatre empreintes 230, comme représenté sur les figures 10 à 14.

Pour réaliser ce moule 200, on utilise de préférence une mère de moule en aluminium ou en acier polie glace à la forme par exemple de quatre plaques de finition 110. Cette mère de moule forme un couvercle plan qui ferme de manière étanche l'embase 220 du moule. Cette embase 220 comporte un fond plan entouré d'un rebord et comportant un orifice d'entrée à travers lequel du silicone à l'état liquide peut être versé à l'intérieur du coffret formé par l'embase 220 et la mère de moule, de façon à recouvrir ladite mère de moule.

En polymérisant, le silicone se solidifie dans le coffret, autour de la mère de moule pour former un moule souple comportant l'empreinte de cette mère de moule. Ce moule souple constitue la partie souple 250 du moule 200. L'embase 220 fournit un support plan et rigide à cette partie souple 250 du moule 200.

Pour fabriquer quatre plaques de finition 110, le fond des empreintes 230 de la partie souple 250 du moule 200 est rempli d'une épaisseur prédéterminée de matériau de structure à l'état liquide. Ce coulage est ici effectué à froid.

Comme représenté sur la figure 11, le support 300 comporte un plateau 310 plan, à partir duquel s'étendent perpendiculairement les broches de maintien 320 et de positionnement 330 des plaques métalliques 140 sur le support 300 qui se présentent sous la forme de tiges métalliques de longueurs identiques.

Il est prévu par exemple pour chaque plaque métallique 140 à fixer sur le plateau 310 du support 300 deux broches de maintien 320 aimantées de façon permanente et deux broches de positionnement 330 non aimantées, disposées de façon à ce que l'extrémité de chaque broche de maintien 320 et de positionnement 330 soit mise en contact avec un coin de la plaque métallique 140.

Les deux broches de maintien 320 de chaque plaque métallique 140 sont mises en contact avec deux coins opposés de celle-ci pour la retenir et la plaquer contre les extrémités des deux broches de positionnement 330 de manière que chaque plaque métallique 140 s'étende dans un plan parallèle au plateau 310 du support 300.

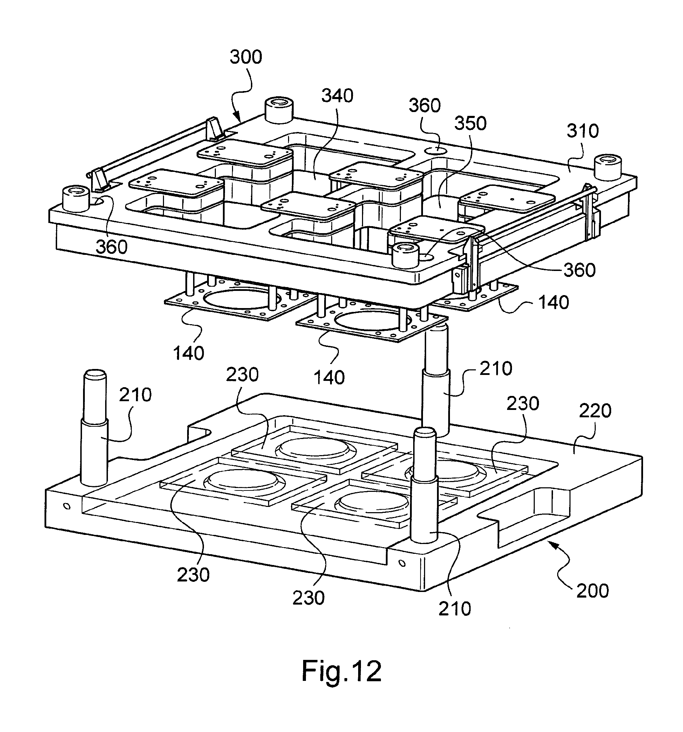

Comme le montrent les figures 12 à 14, ledit support 300 et ladite embase 220 du moule 200 comportent des moyens de montage et de centrage dudit plateau 310 du support 300 sur cette dernière.

Ces moyens de montage et de centrage du plateau 310 du support 300 comportent ici trois colonnes 210 de centrage qui s'élèvent à partir de l'embase 220 du moule 200, perpendiculairement à celle-ci, et sont réparties régulièrement autour de la partie souple 250 du moule 200.

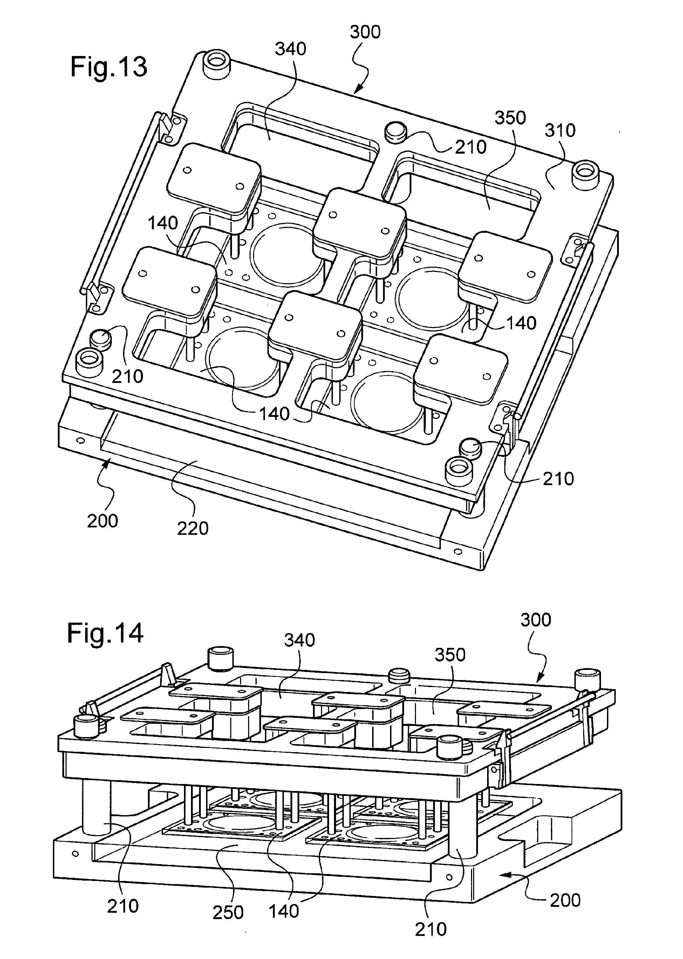

Ces colonnes 210 coopèrent avec des orifices 360 correspondants aménagés dans le plateau 310 du support 300 (voir figure 13).

Comme le montrent les figures 10 et 12, chacune des colonnes 210 comporte deux parties cylindriques de même axe présentant deux diamètres différents. La partie inférieure de chaque colonne 210 s'élève à partir de l'embase 220 du moule 200 et présente un diamètre supérieur au diamètre de l'orifice 360 correspondant du plateau 310 du support 300. La partie supérieure de chaque colonne 210 s'élève à partir de la partie inférieure de cette colonne 210 et présente un diamètre inférieur au diamètre de l'orifice 360 correspondant du plateau 310 du support 300.

La partie supérieure de chaque colonne 210 est ainsi adaptée à coulisser à travers l'orifice 360 correspondant du plateau 310 du support 300 jusqu'à ce que ce plateau 310 entre en butée avec la partie inférieure de chaque colonne 210.

Comme le montrent les figures 13 et 14, le plateau 310 est alors maintenu au-dessus du moule 200 à une altitude prédéterminée définie par la hauteur de la partie inférieure des colonnes 210 et assurant que chaque plaque métallique 140 fixée aux extrémités des broches de maintien 320 et de positionnement 330 est positionnée dans l'empreinte 230 correspondante de la plaque de finition 110 à une distance d'environ 1,25 millimètre du bord libre de l'empreinte 230 qui délimite la face arrière 116 de la plaque de finition 110 à réaliser.

Chaque plaque métallique 140 est également positionnée de manière que son ouverture centrale 142 et l'empreinte de l'ouverture 112 de la plaque de finition à réaliser soient disposées de manière concentrique. Chaque plaque métallique 140 est ainsi centrée en hauteur, en longueur et en largeur dans l'empreinte 230 correspondante.

Comme le montrent plus particulièrement les figures 11 à 14, le plateau 310 du support 300 comporte ici avantageusement des ouvertures 340, 350 traversantes autorisant le coulage du matériau de structure à l'état liquide à travers le plateau 310 du support 300. Le matériau moulé est donc aisément coulé de manière à recouvrir les plaques métalliques 140 maintenues par les broches de maintien 320 et de positionnement 330 à une altitude prédéterminée dans les empreintes 230 du moule 200.

On attend ensuite la prise du matériau de structure. Ce temps de prise est ici de 30 à 40 minutes.

On écarte ensuite le plateau 310 du support 300 de l'embase 220 du moule 200. Ce faisant, les plaques de finition 110 retenues aux extrémités des broches de maintien 320 et de positionnement 330 du plateau 310 de support 300 sortent du moule 200.

Enfin, on détache les plaques de finition 110 des extrémités des broches de maintien 320 et de positionnement 330. La face arrière 116 desdites plaques de finition 110, représentée sur la figure 4, garde l'empreinte les broches de maintien 320 et de positionnement 330 sous la forme d'évidements 117, 118.

La plaque de finition 140 obtenue dans le matériau de structure décrit précédemment est lisse et ne nécessite avantageusement aucune reprise mécanique. Elle peut être avantageusement cirée.

La présente invention n'est nullement limitée au mode de réalisation décrit et représenté, mais l'homme du métier saura y apporter toute variante conforme à son esprit.

En variante par exemple, ledit matériau de structure est un béton de ciment, un béton de chaux, un ciment ou de la pierre reconstituée. Le coulage de ces matériaux de structure est également réalisé à froid.

En variante encore, ledit matériau de structure est une résine à base par exemple de polyester. Le coulage est alors réalisé à chaud, et le moule peut être chauffé pour favoriser la polymérisation de cette résine.

Le matériau de structure peut également être du béton fibré comportant des renforts en fibres de verre, en fibres synthétiques ou en fibres métalliques.

On peut prévoir également que les broches de maintien des plaques métalliques sur le support sont aimantées de façon contrôlée par un courant électrique pendant le coulage et la prise du matériau de structure ainsi que lors du démoulage. Elles peuvent ensuite être désaimantées pour détacher les plaques de finition des extrémités de ces broches de maintien.

Les broches de maintien et de positionnement peuvent également retenir les plaques métalliques par un clipsage léger.

La plaque de finition peut être fixée sur la paroi de support de la sous-plaque par tout moyen connu de l'homme du métier. La sous-plaque peut par exemple comporter des pattes de clipsage adaptées à clipser cette plaque de finition sur la sous-plaque.

La plaque de finition peut également comporter plusieurs plaques métalliques d'armature, par exemple deux plaques métalliques disposées de part et d'autre de l'ouverture de la plaque de finition.

## Revendications

1. Plaque d'habillage (100) pour appareillage électrique qui comporte à l'arrière des moyens de montage (127) pour son montage sur une partie avant d'un appareillage électrique et qui présente au moins une ouverture (101) destinée à donner accès à au moins une partie fonctionnelle de l'appareillage électrique, **caractérisée en ce qu'**elle comporte une plaque de finition (110) d'épaisseur comprise entre 2,5 et 5 millimètres, comprenant au moins une plaque métallique (140) d'armature noyée dans un matériau de structure isolant moulé, de manière à être entièrement recouverte de ce matériau de structure.

2. Plaque d'habillage (100) selon la revendication précédente, dans laquelle ledit matériau de structure de ladite plaque de finition (110) comporte de la chaux hydraulique et du plâtre de moulage, des charges minérales, un adjuvant fluidifiant, un adjuvant réducteur d'eau, un adjuvant retardateur de prise, un agent anti-bullage et un entraîneur d'air.

3. Plaque d'habillage (100) selon la revendication 1, dans laquelle ledit matériau de structure est un béton de ciment.

4. Plaque d'habillage (100) selon la revendication 1, dans laquelle ledit matériau de structure est un béton de chaux.

5. Plaque d'habillage (100) selon la revendication 1, dans laquelle ledit matériau de structure est un ciment.

6. Plaque d'habillage (100) selon la revendication 1, dans laquelle ledit matériau de structure est de la pierre reconstituée.

7. Plaque d'habillage (100) selon la revendication 1, dans laquelle ledit matériau de structure est une résine.

8. Plaque d'habillage (100) selon l'une des revendications précédentes, dans laquelle ladite plaque métallique (140) est située dans ledit matériau de structure à une distance environ égale à 1,25 millimètres de la face arrière (116) de ladite plaque de finition (110).

9. Plaque d'habillage (100) selon l'une des revendications précédentes, dans laquelle ladite plaque métallique (140) présente une forme similaire à ladite plaque de finition (110).

10. Plaque d'habillage (100) selon l'une des revendications précédentes, dans laquelle il est prévu une sous-plaque (120) comportant à l'arrière des moyens d'encliquetage (127) sur la partie avant de l'appareillage électrique et sur laquelle est rapportée à l'avant ladite plaque de finition (110).

11. Plaque d'habillage selon l'une des revendications 1 à 9, dans laquelle il est prévu une sous-plaque sur laquelle est rapportée à l'avant ladite plaque de finition, ladite plaque d'habillage comportant des orifices traversant ladite plaque de finition et ladite sous-plaque pour son vissage sur ladite partie avant dudit appareillage électrique.

12. Procédé de fabrication d'une plaque de finition (110) pour une plaque d'habillage (100) selon l'une des revendications précédentes, comportant les étapes suivantes :
- on coule dans le fond d'un moule (200) comportant au moins une empreinte (230) de la plaque de finition (110) un matériau de structure à l'état liquide pour remplir une partie de ce moule (200) ;
- on fixe de manière amovible au moins une plaque métallique (140) sur des broches de maintien (320) et de positionnement (330) s'étendant à partir d'un support (300) ;
- on rapporte ledit support (300) en vis-à-vis du moule (200), de manière que chaque plaque métallique (140) s'insère de façon centrée dans l'empreinte (230) de la plaque de finition (110) correspondante dudit moule (200);
- on coule le matériau de structure à l'état liquide sur ladite plaque métallique (140) dans ledit moule (200) pour remplir celui-ci complètement ;
- après solidification du matériau, on démoule les plaques de finition obtenues et on les détache des broches de maintien (320) et de positionnement (330).

13. Procédé selon la revendication 12, selon lequel, pour démouler les plaques de finition (110), on écarte ledit support (300) dudit moule (200) de manière à sortir les plaques de finition (110) du moule (200), celles-ci restant attachées à l'extrémité des broches de maintien (320) et de positionnement (330) dudit support (300).

14. Procédé selon l'une des revendications 12 et 13, selon lequel, on fixe chaque plaque métallique (140) sur ses broches de maintien (320) par aimantation.

15. Dispositif pour la fabrication d'une plaque de finition (110) pour une plaque d'habillage (100) selon le procédé de l'une des trois revendications précédentes, comportant
- un moule (200) comportant au moins une empreinte (230) d'une plaque de finition (110),
- un support comportant des broches (320, 330) de fixation amovible à une distance prédéterminée dudit support d'au moins une plaque métallique (140) d'armature d'une plaque de finition (110), dont au moins une broche de fixation (320) aimantée, et des moyens de montage (360) sur ledit moule (200) pour maintenir chaque plaque métallique (140) de façon centrée dans l'empreinte (230) correspondante du moule (200).

## Patentansprüche

1. Verkleidungsplatte (100) für eine elektrische Gerätschaft, die auf der Rückseite für ihre Montage auf einen vorderen Bereich einer elektrischen Gerätschaft Montagemittel (127) umfasst und für den Zugang zu mindestens einem Funktionsbereich der elektrischen Gerätschaft mindestens eine Öffnung (101) aufweist, **dadurch gekennzeichnet, dass** sie eine Abschlussplatte (110) mit einer Dicke von 2,5 bis 5 Millimeter umfasst, welche mindestens eine metallische Stützplatte (140) umfasst, die in ein isolierendes, gussgeformtes Werkstoffgefüge eingelassen ist, sodass sie ganz von diesem Werkstoffgefüge bedeckt ist.

2. Verkleidungsplatte (100) nach vorausgehendem Anspruch, bei der das Werkstoffgefüge der Abschlussplatte (110) hydraulischen Kalk und Formgussgips, mineralische Füllstoffe, ein verflüssigendes Zusatzmittel, ein wasserreduzierendes Zusatzmittel, ein die Bindung verzögerndes Zusatzmittel, ein Antiblasenmittel und einen Luftporenzusatzstoff enthält.

3. Verkleidungsplatte (100) nach Anspruch 1, bei der das Werkstoffgefüge ein Zementbeton ist.

4. Verkleidungsplatte (100) nach Anspruch 1, bei der das Werkstoffgefüge ein Kalkbeton ist.

5. Verkleidungsplatte (100) nach Anspruch 1, bei der das Werkstoffgefüge ein Zement ist.

6. Verkleidungsplatte (100) nach Anspruch 1, bei der das Werkstoffgefüge ein Kunststein ist.

7. Verkleidungsplatte (100) nach Anspruch 1, bei der das Werkstoffgefüge ein Harz ist.

8. Verkleidungsplatte (100) nach einem der vorausgehenden Ansprüche, bei der die Metallplatte (140) im Werkstoffgefüge um rund 1,25 Millimeter von der Rückseite (116) der Abschlussplatte (110) entfernt liegt.

9. Verkleidungsplatte (100) nach einem der vorausgehenden Ansprüche, bei der die Metallplatte (140) eine in Bezug zur Abschlussplatte gleichartige Form aufweist.

10. Verkleidungsplatte (100) nach einem der vorausgehenden Ansprüche, bei der eine Unterplatte (120) vorgesehen ist, die auf der Rückseite Mittel zum Einschnappen (127) auf der Vorderseite der elektrischen Gerätschaft umfasst und auf deren Vorderseite die Abschlussplatte (110) aufgesetzt wird.

11. Verkleidungsplatte nach einem der Ansprüche 1 bis 9, bei der eine Unterplatte vorgesehen ist, auf deren Vorderseite die Abschlussplatte aufgesetzt wird, wobei die Verkleidungsplatte die Abschlussplatte und die Unterplatte durchdringende Öffnungen umfasst, um auf die Vorderseite der elektrischen Gerätschaft geschraubt werden zu können.

12. Fertigungsverfahren einer Abschlussplatte (110) für eine Verkleidungsplatte (100) nach einem der vorausgehenden Ansprüche, das folgende Schritte umfasst:
- man gießt in den Boden einer Gussform (200), die mindestens einen Abdruck (230) der Abschlussplatte (110) enthält, ein Werkstoffgefüge in flüssigem Zustand, um einen Teil dieser Gussform (200) zu füllen;
- man befestigt auf lösbare Weise mindestens eine Metallplatte (140) auf Stifte zum Halten (320) und Positionieren (330), die sich von einer Halterung (300) ausgehend erstrecken;
- man bringt diese Halterung (300) gegenüber der Gussform (200) an, sodass sich jede Metallplatte (140) mittig in den Abdruck (230) der entsprechenden Abschlussplatte (110) der Gussform (200) einfügt;
- man gießt das Werkstoffgefüge im flüssigen Zustand auf diese Metallplatte (140) in der Gussform (200), um diese ganz zu füllen;
- nach Festwerden des Werkstoffs werden die erhaltenen Abschlussplatten aus der Gussform genommen, und man trennt sie von den Stiften zum Halten (320) und Positionieren (330) ab.

13. Verfahren nach Anspruch 12, nach dem man zum Herausnehmen der Abschlussplatten (110) aus der Gussform die Halterung (300) derart von der Gussform (200) wegschiebt, dass die Abschlussplatten (110) aus der Gussform (200) herausgenommen werden können, wobei die Abschlussplatten mit dem Ende der Stifte zum Halten (320) und Positionieren (330) der Halterung (300) verbunden bleiben.

14. Verfahren nach einem der Ansprüche 12 und 13, nach dem man jede Metallplatte (140) auf ihren Haltestiften (320) durch Magnetisierung befestigt.

15. Vorrichtung für die Fertigung einer Abschlussplatte (110) für eine Verkleidungsplatte (100) nach dem Verfahren nach einem der drei vorausgehenden Ansprüche, welche umfasst:
- eine Gussform (200) mit mindestens einem Abdruck (230) einer Abschlussplatte (110),
- eine Halterung mit lösbaren Befestigungsstiften (320, 330) in einer vorbestimmten Entfernung zur Halterung von mindestens einer metallischen Stützplatte (140) einer Abschlussplatte (110), wobei mindestens ein Befestigungsstift (320) magnetisiert ist, sowie mit Mitteln zur Montage (360) auf der Gussform (200), um jede Metallplatte (140) mittig im entsprechenden Abdruck (230) der Gussform (200) zu halten.

## Claims

1. A cover plate (100) for an electrical apparatus, which cover plate includes, at the rear, mounting means (127) for mounting it on a front portion of an electrical apparatus, and presents at least one opening (101) for giving access to at least one functional portion of the electrical apparatus, the cover plate being **characterized in that** it includes a finishing plate (110) of thickness lying in the range 2.5 mm to 5 mm, and including at least one metal reinforcement plate (140) that is embedded in a molded insulating structural material, in such a manner as to be covered entirely with this structural material.

2. A cover plate (100) according to the preceding claim, wherein said structural material of said finishing plate (110) comprises: hydraulic lime and plaster of Paris, inorganic fillers, a thinner additive, a water-reducing additive, a retarder additive, an anti-foaming additive, and an air-entraining agent.

3. A cover plate (100) according to claim 1, wherein said structural material is a cement concrete.

4. A cover plate (100) according to claim 1, wherein said structural material is a lime concrete.

5. A cover plate (100) according to claim 1, wherein said structural material is a cement.

6. A cover plate (100) according to claim 1, wherein said structural material is reconstituted stone.

7. A cover plate (100) according to claim 1, wherein said structural material is a resin.

8. A cover plate (100) according to any preceding claim, wherein said metal plate (140) is situated in said structural material at a distance approximately equal to 1.25 mm from the rear face (116) of said finishing plate (110).

9. A cover plate (100) according to any preceding claim, wherein said metal plate (140) presents a shape that is similar to said finishing plate (110).

10. A cover plate (100) according to any preceding claim, wherein a sub-plate (120) is provided that, on its rear, includes snap-fastener means (127) for snap-fastening on the front portion of the electrical apparatus, and, on its front, has said finishing plate (110) fitted thereto.

11. A cover plate according to any one of claims 1 to 9, wherein a sub-plate is provided on the front of which said finishing plate is fitted, said cover plate including orifices that pass through said finishing plate and said sub-plate for screw-fastening it on said front portion of said electrical apparatus.

12. A method of manufacturing a finishing plate (110) for a cover plate (100) according to any preceding claim, the method comprising the following steps:
• pouring a structural material in the liquid state into the bottom of a mold (200) that includes at least one cavity (230) for forming the finishing plate (110), so as to fill a portion of the mold (200);
• fastening at least one metal plate (140) in removable manner on holding and positioning pins (320, 330) that extend from a support (300);
• fitting said support (300) facing the mold (200) in such a manner that each metal plate (140) is inserted in centered manner in the cavity (230) for the corresponding finishing plate (110) of said mold (200);
• pouring the structural material in the liquid state on said metal plate (140) in said mold (200) so as to fill said mold completely; and
• after the material has set, unmolding the resulting finishing plates and detaching them from the holding and positioning pins (320, 330).

13. A method according to claim 12, wherein, in order to unmold the finishing plates (110), said support (300) is moved away from said mold (200) so as to remove the finishing plates (110) from the mold (200), said finishing plates remaining attached to the ends of the holding and positioning pins (320, 330) of said support (300).

14. A method according to claim 12 or claim 13, wherein each metal plate (140) is held on the holding pins (320) by magnetization.

15. A device for manufacturing a finishing plate (110) for a cover plate (100) according to any one of the three immediately preceding claims, the device comprising:
• a mold (200) including at least one cavity (230) for a finishing plate (110); and
• a support including pins (320, 330) for releasably fastening at least one metal reinforcement plate (140) of a finishing plate (110) at a predetermined distance from said support, at least one of the fastener pins (320) being magnetized, and mounting means (360) for mounting on said mold (200) so as to hold each metal plate (140) in centered manner in the corresponding cavity (230) of the mold (200).
